(19) Europäisches Patentamt
European Patent Office
Office européen des brevets

(11) **EP 3 809 157 B1**

(12) **EUROPÄISCHE PATENTSCHRIFT**

(45) Veröffentlichungstag und Bekanntmachung des Hinweises auf die Patenterteilung:
**09.03.2022   Patentblatt 2022/10**

(51) Internationale Patentklassifikation (IPC):
**G01S 7/484** *(2006.01)*        **G01S 7/486** *(2020.01)*
**G01S 17/931** *(2020.01)*

(21) Anmeldenummer: **20198360.8**

(22) Anmeldetag: **25.09.2020**

(52) Gemeinsame Patentklassifikation (CPC):
**G01S 7/484; G01S 7/4868; G01S 17/931**

(54) **ENTFERNUNGSMESSENDER OPTOELEKTRONISCHER SENSOR UND VERFAHREN ZUR ERFASSUNG EINES ZIELOBJEKTS**

DISTANCE-MEASURING OPTOELECTRONIC SENSOR AND METHOD FOR DETECTING A TARGET OBJECT

CAPTEUR OPTOÉLECTRONIQUE DE MESURE DE DISTANCE ET PROCÉDÉ DE DÉTECTION D'UN OBJET CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019   DE 102019127667**

(43) Veröffentlichungstag der Anmeldung:
**21.04.2021   Patentblatt 2021/16**

(73) Patentinhaber: **SICK AG**
**79183 Waldkirch (DE)**

(72) Erfinder:
• **Schmitz, Stephan**
  **79194 Gundelfingen (DE)**
• **Braune, Ingolf**
  **79194 Gundelfingen (DE)**

(56) Entgegenhaltungen:
**DE-A1- 3 903 501        DE-B3-102014 100 696**
**US-A1- 2018 113 200      US-A1- 2019 064 331**

**Beschreibung**

Die Erfindung betrifft einen entfernungsmessenden optoelektronischen Sensor, insbesondere Laserscanner, und ein Verfahren zur Erfassung eines Zielobjekts nach dem Oberbegriff von Anspruch 1 beziehungsweise 15.

Entfernungsmessende Laserscanner werden in vielen Anwendungen zur Objekterfassung eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Die periodische Abtastung wird üblicherweise dadurch erreicht, dass der ausgesandte Lichtstrahl auf einen rotierenden Drehspiegel trifft. Lichtsender, Lichtempfänger sowie zugehörige Elektronik und Optik sind im Gerät fest montiert und vollziehen die Drehbewegung nicht mit. Es ist aber alternativ auch denkbar, den Drehspiegel durch eine mitbewegte Abtasteinheit zu ersetzten. Beispielsweise rotiert in der DE 197 57 849 B4 der gesamte Messkopf mit Lichtsender und Lichtempfänger.

Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Eine zusätzliche Abtastbewegung in Elevation oder die Verwendung mehrerer in Elevation zueinander versetzter Abtaststrahlen erweitert den Überwachungsbereich zu einem dreidimensionalen Raumbereich. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

In verschiedenen Anwendungen besteht die Aufgabe des Laserscanners darin, selektiv bestimmte kooperative Ziele zu erfassen. Beispielsweise sind Laserscanner und kooperative Ziel an Fahrzeugen in einem Transportsystem einer Fabrikanlage angebracht, die sich gegenseitig durch die Erfassung des kooperativen Ziels erkennen, um einander auszuweichen oder rechtzeitig abzubremsen. Je früher und verlässlicher die Laserscanner die kooperativen Ziele erfassen, umso schneller können die Fahrzeuge unter Berücksichtigung des erforderlichen Bremswegs fahren, und natürlich lässt sich die Produktivität der Fabrikanlage mit schnelleren Fahrzeugen steigern.

Im Prinzip werden diese Anforderungen erfüllt, indem als kooperatives Ziel ein Retroreflektor verwendet wird. Die davon reflektierten Lichtpulse sind stärker als diejenigen aller anderen Objekte, selbst von spiegelnden Metallflächen und dergleichen, die immer auch eine gewisse Rückstreucharakteristik aufweisen, also nicht alles Licht reflektieren. Es ist aber nicht verlässlich möglich, diesen Intensitätsunterschied zu erkennen. Das gilt besonders deshalb, weil typischerweise ein Lichtempfänger relativ kostengünstig ausgelegt wird und nur einen kleinen dynamischen Bereich aufweist. Ab einem gewissen Punkt erfolgt eine Sättigung, so dass stärkere Lichtpulse die Signalamplitude nur noch geringfügig und irgendwann auch gar nicht mehr erhöhen. Mit aufwändigeren Lichtempfängern lässt sich ein größerer dynamischer Bereich abdecken, aber nicht für die gesamte Signaldynamik zwischen den Extremen eines Reflektors in kurzer Reichweite und einem dunklen Ziel in maximaler Reichweite.

Eine bekannte Möglichkeit, einen Retroreflektor zu erkennen, ist die Verwendung von polarisiertem Licht. Im Sendepfad erzeugt ein Polarisator linear polarisiertes Licht, während im Empfangspfad ein um 90° dagegen verdreht ausgerichtetes Polarisationsfilter angeordnet ist. Die Reflexion an einem Retroreflektor dreht die Polarisationsrichtung um 90°, so dass nur dieses Empfangslicht passieren kann und Licht, das an anderen Objekten reflektiert oder gestreut wurde, ausgefiltert wird. Ein entsprechender Laserscanner zu Erfassung von kooperativen Zielen an Transporteinheiten eines Hängeförderers ist aus der WO 2018/150999 A1 bekannt.

Dabei entstehen jedoch Zusatzkosten für die Polarisationsfilter und Fertigungsaufwand für deren Ausrichtung. Außerdem muss darauf geachtet werden, dass die optischen Elemente im Lichtpfad die Polarisation nicht stören. Insbesondere die Frontscheibe muss frei von spannungsinduzierter Doppelbrechung sein, was zwar möglich ist und in der DE 10 2018 104 787 A1 erläutert wird, aber nochmals Zusatzaufwand bedeutet.

Der große erforderliche Dynamikumfang für einen Laserscanner ist bekannt, und dafür gibt es zahlreiche Lösungsansätze. Dabei geht es aber nicht um die Erfassung eines kooperativen Ziels. So befasst sich die EP 1 936 400 B1 mit einem Laserscanner, der jeweils einen Vorpuls aussendet, um vor der eigentlichen Entfernungsmessung eine Information über die Empfangsstärke zu erhalten und die Sendestärke daran anzupassen. Die damit erreichte Aussteuerung ist in vielen Fällen immer noch ungeeignet, ein kooperatives Ziel von einem sonstigen Objekt zu unterscheiden, was ja auch nicht das Ziel der EP 1 936 400 B1 ist. Die Anpassung erfolgt zudem allein aus der Empfangsintensität des Vorpulses, eine Entfernungsinformation wird daraus nicht gemessen. Das wäre aus Sicht der EP 1 936 400 B1 sogar widersinnig, die den Vorpuls als Voraussetzung ansieht, überhaupt mit der nachfolgenden Messung eine Lichtlaufzeit bestimmen zu können.

In der EP 2 395 368 B1 erfolgt jede Messung doppelt einmal mit einem schwachen und einmal mit einem starken Puls. Sofern der schwache Puls zu einem ausreichenden Signal-Rausch-Verhältnis im Empfangssignal führt, wird daraus die Lichtlaufzeit bestimmt, sonst aus dem starken Puls. Erneut ist das zwar eine Möglichkeit, mit dem Dynamikumfang umzugehen, nicht aber zur Unterscheidung von kooperativen und sonstigen Objekten.

Die US 2019/0064331 A1 offenbart ein Verfahren zur dynamischen Steuerung der Laserleistung eines Lidar-Systems. Es werden insbesondere aufgrund des Augenschutzes verschiedene Ereignisse überwacht, die eine Umschaltung der Laserleistung auslösen. Als Ereignisse sind eine gewisse Mindestgeschwindigkeit eines mit dem Lidar-System ausgerüsteten Fahrzeugs, atmosphärische Bedingungen wie Nebel oder Regen, ein in einer Schwellendistanz erfasstes Objekt und Umgebungslicht genannt.

In der DE 39 03 501 A1 wird ein optisches Abstands-Messgerät für Fahrzeuge vorgestellt. Die Ausgangsleistung des Sendelasers wird bei guten Sichtbedingungen auf ein Minimum geregelt. Bei schlechten Sichtverhältnissen wird der Lasersendestrahl auf ein entsprechendes Maximum höher geregelt, um das Signal-Rausch-Verhältnis zu verbessern. Dabei richtet sich die maximale Leistung nach der Augensicherheit.

Die DE 10 2014 100 696 B3 befasst sich mit einem entfernungsmessenden Sensor nach dem Lichtlaufzeitprinzip, der dem Messsignal gezielt ein Rauschen hinzufügt. In einer Ausführungsform ist eine mehrkanalige Auswertung mit unterschiedlicher Empfindlichkeit vorgesehen.

Aus der US 2018/0113200 A1 ist ein Lidar bekannt, das einen interessierenden Bereich auffindet und diesen in einem späteren Scan mit höherer Intensität erfasst.

Es ist daher Aufgabe der Erfindung, die Erfassung eines Zielobjekts mit einem gattungsgemäßen Sensor zu verbessern.

Diese Aufgabe wird durch einen entfernungsmessenden optoelektronischen Sensor, insbesondere Laserscanner, und ein Verfahren zur Erfassung eines Zielobjekts in einem Überwachungsbereich nach Anspruch 1 beziehungsweise 15 gelöst. Es werden für ein pulsbasiertes Lichtlaufzeitverfahren mit einem Lichtsender Lichtpulse ausgesandt und von einer Ablenkeinheit periodisch abgelenkt, um den Überwachungsbereich abzutasten. Dabei kann die Ablenkeinheit als Drehspiegel, beweglicher Abtastkopf oder auch ohne beziehungsweise mit nur mikromechanischer Bewegung ausgestaltet sein, wie dies bei einem Solid-State-Scanner der Fall ist. Aus den nach Remission oder Reflexion zurückkehrenden Lichtpulsen wird ein Empfangssignal erzeug und dieses ausgewertet, um aus deren Lichtlaufzeit eine Entfernung zu bestimmen. Der Lichtsender wird so angesteuert, dass verschieden starke Lichtpulse ausgesandt werden, somit Messungen mit Lichtpulsen einer jeweils vorgegebenen Intensität durchgeführt werden.

Die Erfindung geht von dem Grundgedanken aus, dass nur Zielobjekte, insbesondere kooperative Ziele, mit einem bestimmten Reflexionsvermögen erfasst werden und dazu die Intensität des Lichtpulses so ausgesteuert wird, dass die Unterscheidung zwischen Zielobjekt und sonstigem Objekt im Empfangssignal möglich ist. Zielobjekte sind demnach eine Klasse von Objekten, die sich durch das bestimmte Remissionsvermögen definiert. Das bestimmte Remissionsvermögen ist die Eigenschaft, anhand derer Zielobjekte als solche erkennbar sind. Insbesondere sollen nur Zielobjekte erfasst werden, die mindestens das Reflexionsvermögen aufweisen.

Es geht erfindungsgemäß nicht um eine allgemeine Aussteuerung, mit der nach Möglichkeit sämtliche Erfassungen in einem linearen Bereich des Lichtempfängers gehalten werden. Vielmehr soll speziell für ein aktuell in seiner vorliegenden Entfernung erfasstes Zielobjekt mit dem bestimmten Remissionsvermögen der ausgesandten Lichtpulse gerade die passende Intensität aufweisen. Der Lichtpuls wird variiert, um diejenige Intensität zu finden, in der das Zielobjekt ein von sonstigen Objekten unterscheidbares Empfangssignal liefert. Insbesondere reicht die Sendeenergie gerade aus, um innerhalb der dadurch begrenzten Reichweite ein Zielobjekt noch zu erfassen. Für ein sonstiges Objekt wird der Empfangspuls zu schwach und daher erkannt, dass es sich nicht um ein Zielobjekt handelt. Die Reichweite und die daraus abgeleitete Intensität des Lichtpulses testet gleichsam nur bestimmte Entfernungsintervalle und nicht gleich die gesamte Spanne an messbaren Entfernungen bis zu einer maximalen Reichweite des Sensors auf Zielobjekte, und dadurch wird der Sensor in seiner Erfassung ausreichend selektiv.

Die Erfindung hat den Vorteil, dass ein ausreichender Signalabstand zwischen Zielobjekt und sonstigem Ziel, also zwischen kooperativem Ziel und nicht kooperativem Ziel geschaffen wird. Das ermöglicht eine sehr verlässliche Erkennung der Zielobjekte bei kurzer Ansprechzeit. Zugleich ist die Erfindung kostengünstig auf Grundlage vorhandener Sensoren realisierbar, ohne dass sich der Herstellungsaufwand wesentlich erhöht. Insbesondere ist keine Polarisation erforderlich, wenngleich noch denkbar, um durch Kombination beider Maßnahmen zu noch besseren Ergebnissen zu kommen.

Das Zielobjekt ist vorzugsweise ein Retroreflektor. Das bestimmte Reflexionsvermögen ist dann besonders hoch, höher als bei remittierenden Objekten jeder Helligkeit und auch höher als bei glänzenden oder spiegelnden Oberflächen. Ein Retroreflektor eignet sich daher gut, um das Zielobjekt von anderen Objekten zu unterscheiden. Die Erfindung ermöglicht aber auch, beliebige Reflektoren, d.h. ohne Retroreflexion, von lediglich diffus remittierenden Objekten oder helle von dunkeln Objekten zu unterscheiden.

Die Steuer- und Auswertungseinheit ist bevorzugt dafür ausgebildet, die Intensität eines Lichtpulses durch die Stromstärke des Lichtsenders einzustellen. Damit gibt es eine einfach zugängliche Steuergröße. Da häufig eine Laserlichtquelle im Lichtsender eingesetzt ist, wird dann der Laserstrom variiert. Die Einstellung kann kontinuierlich oder stufenartig in Reichweitenklassen erfolgen.

Dem Lichtempfänger sind bevorzugt mehrere Empfangskanäle unterschiedlicher Empfindlichkeit zugeordnet. Dazu können mehrere Lichtempfangselemente vorgesehen sein, beispielsweise APDs, die mit unterschiedlichen Vorspannungen betrieben und daher unterschiedlich empfindlich sind. Die Empfindlichkeit kann auch durch unterschiedliche Verstärkungsfaktoren nachgeordneter Verstärkerbauteile erreicht werden. Eine weitere Möglichkeit besteht darin, das Empfangssignal elektrisch zu verzweigen und in den Zweigen, die dann die Empfangskanäle bilden, unterschiedliche Verstärkungen vorzusehen.

Die Steuer- und Auswertungseinheit ist bevorzugt dafür ausgebildet, die Intensität der Lichtpulse zu großen und sehr kleinen Reichweiten hin zu steigern. Große Reichweiten beginnen je nach Sensor bei einigen Metern bis hin zu vielen hundert Metern und mehr, kleine Reichweiten bezeichnen dementsprechend den Nahbereich bis zu etwa einem Meter oder auch wenigen Metern. Die Abhängigkeit der erforderlichen Intensität, insbesondere Stromstärke zur Ansteuerung des Lichtsenders, für eine bestimmte Reichweite lässt sich in einer sogenannten Fadeout-Kurve beschreiben. Sie weist ein Minimum bei einer gewissen Entfernung auf. Diese Entfernung ist zwar recht nahe an dem Sensor, aber nicht Null, wie auf den ersten Blick zu erwarten wäre, sondern in einem gewissen Abstand, wo Sende- und Empfangskeulen erstmals vollständig überlappen. Im Nahbereich davor gibt es also Signalverluste durch mangelnde Überlappung, die durch höhere Intensitäten des Lichtpulses ausgeglichen werden. Im Fernbereich erfolgt die Anpassung zum Ausgleich des entfernungsbedingten Abfalls der Empfangsintensität, wobei dieser Abfall durch die gerichtete Reflexion eines Retroreflektors längst nicht stark ist wie bei diffuser Remission und auch Reflexion an einer glänzenden Oberfläche. Anhand der Fadeout-Kurve kann die passende Einstellung für eine gewünschte Reichweite abgelesen werden, sei es kontinuierlich oder in Reichweitenklassen.

Die Steuer- und Auswertungseinheit ist bevorzugt dafür ausgebildet, anfänglich und/oder solange kein Objekt oder Zielobjekt erkannt ist Lichtpulse mit einer Intensität auszusenden, die einer maximalen Reichweite entspricht. Mit diesem Vorgehen wird die passende Intensität des Lichtpulses von oben her gefunden. Dazu wird erst einmal der gesamte Überwachungsbereich abgedeckt, mit den stärksten für diesen Sensor und dessen spezifizierte maximale Reichweite vorgesehenen Lichtpulsen. Die Erfassung mit solchen starken Lichtpulsen allein, wie sie auch dem Vorgehen eines herkömmlichen Laserscanners entspricht, würde aber noch keineswegs sicherstellen, dass Zielobjekte und sonstige Objekte unterschieden werden können. Es ist nur ein erster Schritt, um alle Objekte überhaupt wahrzunehmen, die Anpassung folgt anschließend durch Variation der Intensität des Lichtpulses. Die starken Lichtpulse werden immer dann verwendet, wenn noch keine bessere Information verfügbar ist, insbesondere wenn der Sensor mit seiner Messung beginnt und solange kein Objekt erfasst ist. Wurde bereits ein Zielobjekt erfasst, sei es in einem vorigen Winkelschritt der periodischen Ablenkung oder einer früheren Abtastperiode, so kann in einigen später beschriebenen Ausführungsformen die Messung mit einer anderen Intensität der Lichtpulse durchgeführt werden, da bereits eine Intensität als Ausgangspunkt bekannt ist, mit der mindestens einmal erfolgreich ein Zielobjekt erkannt wurde.

Die Steuer- und Auswertungseinheit ist bevorzugt dafür ausgebildet, bei Erfassen eines Objekts anschließend einen Lichtpuls mit einer Intensität auszusenden, die einer Reichweite für die gemessene Entfernung des Objekts entspricht. Durch die Erfassung des Objekts hat der Sensor Information gewonnen und kann nun in einer nächsten Messung die Intensität an eine Reichweite anpassen, die der tatsächlichen Entfernung entspricht. Dadurch ist gewährleistet, dass ein Zielobjekt wegen seines bestimmten Reflexionsvermögens ein von einem sonstigen Objekt unterscheidbares Empfangssignal erzeugt.

Die Steuer- und Auswertungseinheit ist bevorzugt dafür ausgebildet, anfänglich Lichtpulse mit einer minimalen Intensität auszusenden, wobei die minimale Intensität insbesondere einer Reichweite entspricht, aus der ein Lichtpuls optimal remittiert oder reflektiert wird. Mit diesem Vorgehen wird alternativ die passende Intensität des Lichtpulses von unten her gefunden. Es sei daran erinnert, dass die minimale Intensität nicht dem extremen Nahbereich, sondern einem Punkt höchster Empfindlichkeit in gewissem Abstand entspricht, was oben im Zusammenhang mit Fadeout-Kurven schon erläutert wurde.

Die Steuer- und Auswertungseinheit ist bevorzugt dafür ausgebildet, die Intensität mindestens eines weiteren Lichtpulses zu erhöhen, bis entweder ein Objekt erfasst ist oder die Intensität einer maximalen Reichweite entspricht. Durch schrittweises Erhöhen der Intensität der Lichtpulse wird ein Objekt gleichsam gerade so erstmals erfasst. Beim Auffinden der passenden Intensität der Lichtpulse von oben wird durch die anfängliche Messung sofort genug Information erfasst, um im zweiten Schritt die richtige Intensität zu verwenden. Von unten her ist eine schrittweise Anpassung erforderlich, da hier schlicht nichts gemessen wird, solange die Energie nicht ausreicht. Wird selbst mit einer Intensität der Lichtpulse kein Objekt erfasst, die einer maximalen Reichweite des Sensors entspricht, so ergibt die Messung einen leeren Überwachungsbereich in diesem Abtastwinkel, und es wird mit der minimalen Intensität wieder von vorne angefangen, um in den nächsten Abtastwinkeln womöglich ein Objekt zu finden.

Die Steuer- und Auswertungseinheit ist bevorzugt dafür ausgebildet, bei einer für ein Zielobjekt eingestellten Intensität des Lichtpulses anhand der Intensität des Empfangssignals Zielobjekt und sonstiges Objekt zu unterscheiden. Nachdem die passende Intensität der Lichtpulse von oben oder unten eingestellt ist, sind die Voraussetzungen gegeben, Zielobjekte und sonstige Objekte zuverlässig zu unterscheiden. Ein Zielobjekt erzeugt einen klaren Empfangspuls, ein sonstiges Objekt keinen oder jedenfalls nur einen schwachen Empfangspuls. Die Trennung erfolgt durch eine Schwelle oder alle sonst von Laserscannern zum Erfassen eines Empfangspulses bekannten Verfahren, mit dem Unterschied, dass nun die Empfindlichkeit speziell für Zielobjekte des bestimmten Remissionsvermögens und nicht wie bei herkömmlichen Laserscannern für beliebige Objekte eingestellt ist. Beim Herantasten von unten kann auch der Abstand des Objekts noch als Kriterium herangezogen werden: Die Intensität wurde iterativ entsprechend einer Reichweite eines Zielobjekts erhöht. Es ist denkbar, dass nun die Energie erstmals ausreicht, ein Objekt mit schwächerem Remissionsvermögen in kürzerer Entfernung zu erfassen. Ein Zielobjekt sollte sich also auch nahe der Reichweite befinden, für die eine Intensität eingestellt wurde.

Die Steuer- und Auswertungseinheit ist bevorzugt dafür ausgebildet, eine eingestellte Intensität des Lichtpulses in derselben und/oder einer nachfolgenden periodischen Abtastung innerhalb eines Winkelbereichs des Zielobjekts beizubehalten oder an eine Erwartung des Abstands des Zielobjekts anzupassen. Das bisher beschriebene Vorgehen sieht vor, jeweils nach der Erfassung eines Zielobjekts, oder beim Herantasten von unten auch nach Erreichen der maximalen Intensität ohne Objekterfassung, wieder mit der anfänglichen Intensität zu messen. Tatsächlich gibt es aber eine Erwartung, dass auch eine Messung in einer Winkelumgebung der Erfassung des Zielobjekts erneut das Zielobjekt trifft. Eine Möglichkeit ist also, solange die einmal eingestellte Intensität beizubehalten, wie das Zielobjekt damit noch erfasst ist, und erst dann zu den anfänglichen Intensitäten zurückzukehren. Das ist eine lokale Herangehensweise in derselben periodischen Abtastung. Es ist aber auch denkbar, Zielobjekte über mehrere periodische Abtastungen zu verfolgen (Objekt-Tracking). Dafür stehen sämtliche mächtigen und an sich bekannten Algorithmen zur Verfügung, die beispielsweise auf Kalman-Filtern basieren und mit denen sich aus der Historie vorhersagen lässt, in welchem Winkelbereich und welcher Entfernung sich ein Zielobjekt in einer nächsten periodischen Abtastung befinden wird. Wird dabei eine Entfernungsänderung des Zielobjekts vorhergesagt, so wird die bisher eingestellte Intensität daran angepasst. Mit derartigen Optimierungen wird ermöglicht, eine größere Anzahl von Messungen für eine Erkennung des Zielobjekts zu nutzen und weniger Messungen zum Einstellen der passenden Intensität zu verlieren.

Die Steuer- und Auswertungseinheit ist bevorzugt dafür ausgebildet, zu einer anfänglichen Intensität der Lichtpulse zurückzukehren, insbesondere einer minimalen oder maximalen Intensität, sobald das Zielobjekt nicht mehr erfasst ist. Die Einstellungen der Intensität für ein Zielobjekt dürfen nur so lange beibehalten werden, wie die jeweilige Abtastung tatsächlich das Zielobjekt trifft. Wird also der Winkelbereich des Zielobjekts verlassen oder verliert der Tracking-Algorithmus ein Zielobjekt, so wird wieder wie anfänglich nach Zielobjekten gesucht.

Die Steuer- und Auswertungseinheit ist bevorzugt dafür ausgebildet, auch während der Erfassung eines Zielobjekts dessen Entfernung zu messen und bei deren Veränderung die Intensität des Lichtpulses anzupassen. Es ist denkbar, dass ein Zielobjekt eine Kontur aufweist, die zu relevanten Entfernungsänderungen führt oder in einem neuen Winkelschritt ein weiteres Zielobjekt vor dem zuerst erfassten Zielobjekt liegt. Bei einem Objekttracking über mehrere periodische Abtastungen kann sich das Zielobjekt genähert oder entfernt haben. In allen diesen Fällen sollte nicht fix die zuerst eingestellte Intensität für das Zielobjekt verwendet werden, sondern eine Folgeanpassung stattfinden.

In vorteilhafter Weiterbildung ist ein System mit mehreren, insbesondere schienengebundenen, Fahrzeugen vorgesehen, die jeweils mindestens einen erfindungsgemäßen Sensor und mindestens ein Zielobjekt aufweisen, insbesondere einen Retroreflektor, wobei zur Unfallvermeidung anhand der Erfassung der Zielobjekte durch die Sensoren die gegenseitigen Positionen der Fahrzeuge erkannt werden. Die Retroreflektoren sind die Zielobjekte. Die Fahrzeuge sind beispielsweise AGVs (automated guided vehicle) oder sonstige Transporteinheiten eines Logistik- oder Transportsystems, die frei oder auf Schienen fahren. Ein bevorzugtes Beispiel ist ein Hängeförderer etwa einer Foundry, dessen einzelne Laufwagen die Fahrzeuge sind. Die Fahrzeuge vermeiden anhand der gegenseitigen Erfassung der Retroreflektoren mit ihren Laserscannern Unfälle insbesondere durch rechtzeitiges Abbremsen bei kritisch kurzen Abständen.

Die Zielobjekte weisen bevorzugt eine Codierung aus Teilbereichen unterschiedlichen Reflexionsvermögens auf. Insbesondere sind die Zielobjekte Retroreflektoren mit nicht reflektierende Teilbereichen. Das ergibt in der Abtastung einen spezifischen Wechsel zwischen Erfassung und Nichterfassung, also einen Code, der zusätzlich für die Identifizierung und Unterscheidung von Reflexionen an spiegelnden Oberflächen genutzt werden kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Schnittdarstellung eines Laserscanners;

Fig. 2 ein beispielhaftes Ablaufschema zur Einstellung der Intensität des Lichtpulses ausgehend von einer hohen Intensität;

Fig. 3 ein beispielhaftes Ablaufschema zur Einstellung der Intensität des Lichtpulses ausgehend von einer geringen Intensität;

Fig. 4 eine Darstellung der Signalstärke in Abhängigkeit von der Entfernung des angetasteten Objekts und eine beispielhafte Abstufung passender Laserströme; und

Fig. 5 eine schematische Darstellung von Fahrzeugen mit Laserscannern und Retroreflektoren, die einander anhand der gegenseitigen Erfassung der Retroreflektoren erkennen.

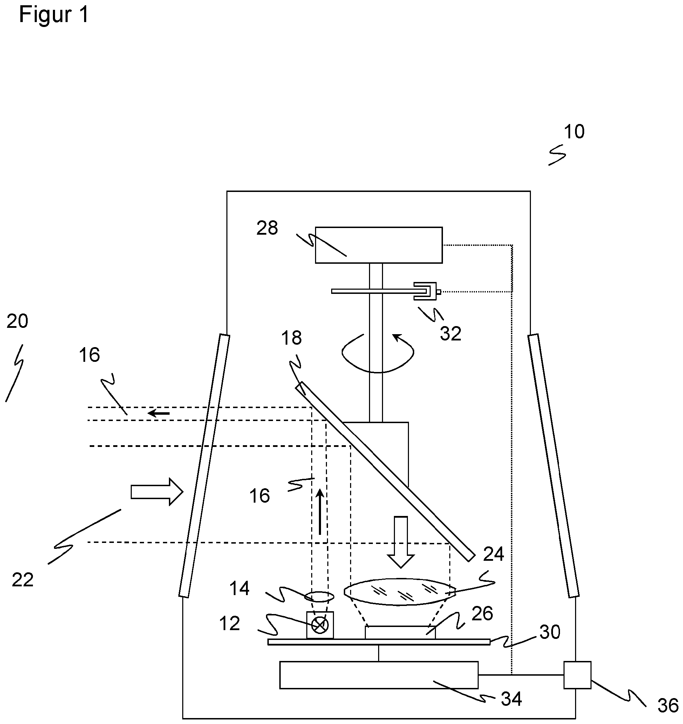

Figur 1 zeigt eine schematische Schnittdarstellung durch einen erfindungsgemäßen Sensor, der als Laserscanner 10 ausgebildet ist. Ein Lichtsender 12, beispielsweise mit einer Laserlichtquelle im infraroten oder einem anderen Spektrum, erzeugt mit Hilfe einer Sendeoptik 14 Sendelicht 16 mit Lichtpulsen, das an einer Ablenkeinheit 18 in einen Überwachungsbereich 20 umgelenkt wird. Die Lichtpulse sind vorzugsweise sehr kurz, etwa im Bereich von 0,5 bis 2,5 ns oder je nach technischen Möglichkeiten noch kürzer. Lichtpulse können Einzelpulse, aber auch einfache Codes aus einigen Pulsen, Bursts oder Doppelpulse sein.

Fällt das Sendelicht 16 in dem Überwachungsbereich 20 auf ein Objekt, so gelangt reflektiertes oder remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode). Das Empfangssignal des Lichtempfängers 26 wird je nach Ausführungsform direkt analog oder digital bewertet, beispielsweise mit einer Schwelle, oder in einem AD-Wandler vorzugsweise mit einer Auflösung von mindestens einem Fünftel der Pulsbreite digitalisiert und für die Auswertung zwischengespeichert.

Die Ablenkeinheit 18 ist in dieser Ausführungsform als Drehspiegel ausgestaltet und rotiert durch Antrieb eines Motors 28 kontinuierlich. Alternativ kann ein Messkopf samt Lichtsender 12 und Lichtempfänger 26 rotieren. Weitere alternative Bauformen nutzen ein Drehprisma oder eine kippbare Flüssiglinse. Auch Solid-State-Scanner ohne makroskopische bewegte Teile sind möglich, die eine Abtastung durch MEMS, optical phased array, akusto-optischen Modulator oder ähnliches erzielen, oder die eine Bewegung durch gezieltes Aktivieren bestimmter Lichtquellen des Lichtsenders 12 und Pixel des Lichtempfängers 26 emulieren, wobei dann beispielsweise der Lichtsender 12 eine VCSEL-Array und der Lichtempfänger 26 ein SPAD-Array ist.

Das von dem Lichtsender 12 erzeugte Sendelicht 16 überstreicht somit den durch die Rotationsbewegung erzeugten Überwachungsbereich 20. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt. In der dargestellten Ausführungsform sind Lichtsender 12 und Lichtempfänger 26 auf einer gemeinsamen Leiterkarte 30 untergebracht. Auch das ist nur ein Beispiel, denn es können eigene Leiterkarten sowie andere Anordnungen beispielsweise mit einem gegenseitigen Höhenversatz vorgesehen sein.

Anstelle eines Lichtempfängers 26 mit nur einem Lichtempfangselement können auch mehrere Lichtempfangselemente vorgesehen sein, insbesondere APDs. Dadurch werden dann mehrere Empfangssignale erzeugt, die beispielsweise durch unterschiedliche Vorspannungen an den APDs und/oder unterschiedliche Nachverstärkung gemeinsam einen größeren Dynamikbereich annähernd linear erfassen. Alternativ wird das Empfangssignal elektrisch verzweigt. Der Laserscanner 10 hat dann jeweils nicht mehr nur einen Empfangskanal, sondern mehrere Empfangskanäle unterschiedlicher Empfindlichkeit, beispielsweise einen empfindlichen, einen mittleren und einen unempfindlichen Empfangskanal.

Die jeweilige Winkelstellung des Motors 28 beziehungsweise der Ablenkeinheit 18 wird über eine Winkelmesseinheit 32 erfasst, hier beispielhaft in Form einer mitdrehenden Codescheibe und einer Gabellichtschranke. Wird nun von dem Lichtempfänger 26 remittiertes Licht 22 aus dem Überwachungsbereich 20 empfangen, so kann aus der von der Winkelmesseinheit 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtpulses bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Auswertung erfolgt in einer Auswertungseinheit 34, die dafür mit dem Lichtsender 12, dem Lichtempfänger 26, dem Motor 28 und der Winkelmesseinheit 32 verbunden ist. Somit stehen über den Winkel und die Entfernung zweidimensionale Polarkoordinaten aller Objekte in dem Überwachungsbereich 20 zur Verfügung.

Die Steuer- und Auswertungseinheit 34 ist außerdem für eine sogleich zu erläuternde Unterscheidung bestimmter Zielobjekte mit einem bestimmten Reflexionsvermögen, insbesondere Retroreflektoren, von sonstigen Objekten ausgebildet und verändert dafür die Intensität der ausgesandten Lichtpulse. Zumindest dieser Teil der Auswertung kann alternativ auch extern erfolgen, indem die erforderlichen Mess- und Steuerungsdaten über eine Schnittstelle 36 mit einem übergeordneten System ausgetauscht werden.

Zunächst soll anhand eines Zahlenbeispiels die Funktionsweise des Laserscanners 10 insbesondere bei der Erfassung von spiegelnden Flächen und Retroreflektoren noch etwas vertieft betrachtet werden. Die Ablenkeinheit 18 dreht sich mit einer gewissen Rotationsfrequenz $f_{rot}$ hier von $f_{rot}$ = 50 *Hz*. Die Messrepetitionsrate, mit der von dem Lichtsender 12 Lichtpulse ausgesandt werden, bestimmt die Winkelauflösung der Abtastung und soll hier so gewählt sein, dass alle 0,1° ein Lichtpuls erzeugt wird. Dies ergibt über eine Umdrehung

$$N_{mess} = \frac{360°}{0,1°} = 3600$$ Messungen. Die genaue Winkelzuordnung erfolgt mit Hilfe der Winkelmesseinheit 32.

Die Messperiode beträgt $T_{rep} = \frac{1}{f_{rot} N_{mess}} = 5,6\mu s$.

Die optimierte Unterscheidung von Zielobjekten mit bestimmtem Reflexionsvermögen des erfindungsgemäßen Laserscanners 10 wird am Beispiel von Retroreflektoren beschrieben. Die Gefahr einer Verwechslung besteht vornehmlich bei metallisch hochglänzenden Objekten. Zwar gelangt von einem Retroreflektor ein größerer Prozentsatz des Sendelichts 16 zurück zum Laserscanner 10, denn bei einem metallischen Reflektor gibt es wie bei diffusen streuenden Objekten den typischen $\frac{1}{r^2}$ - Abfall mit der Entfernung, der je nach konkreter metallischer Oberfläche stärker oder weniger stark ausgeprägt ist. Es ist aber damit zu rechnen, dass der Unterschied lediglich 20%-30% beträgt.

Dieser Signalunterschied ließe sich prinzipiell schon unterscheiden, sofern das Empfangssignal ihn tatsächlich erfasst. Das ist aber wegen der Signaldynamik über sechs Größenordnung, die dem unterschiedlichen Remissionsvermögen der Objekte und deren unterschiedlichen Abständen geschuldet ist, eine erhebliche Herausforderung. Herkömmlich wird ein Laserscanner 10 so ausgelegt, dass die Lichtpulse eine maximale Stärke aufweisen, um auch ein Objekt mit geringem Remissionsvermögen in großer Entfernung zu erfassen. Für den Extremfall eines nahen Retroreflektors ist dann der Lichtempfänger 26 völlig übersteuert so dass sich die Stärke eines Lichtpulses nicht mehr in dessen Amplitude im Empfangssignal äußert, sondern die Pulsbreite zunimmt. Deshalb lässt sich der Signalunterschied praktisch nicht oder jedenfalls nur schlecht auflösen. Dabei wird die Stärke eines Lichtpulses in dieser Beschreibung über die Intensität definiert, d.h. die Amplitude oder der Pegel des Empfangssignals. Die Energie wäre alternativ die Fläche unter dem Lichtpuls, wobei die Fläche aber bei konstanter Pulsform direkt mit der Amplitude skaliert, solange der Lichtempfänger nicht übersteuert ist.

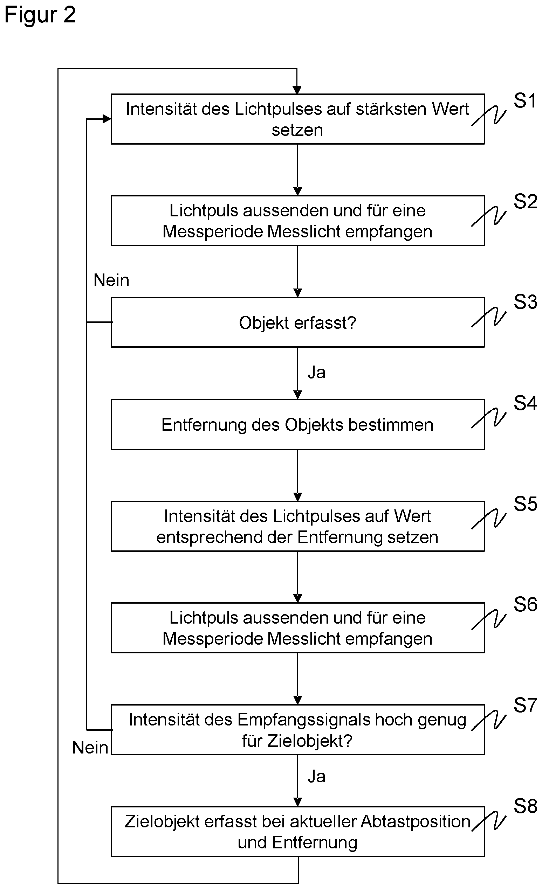

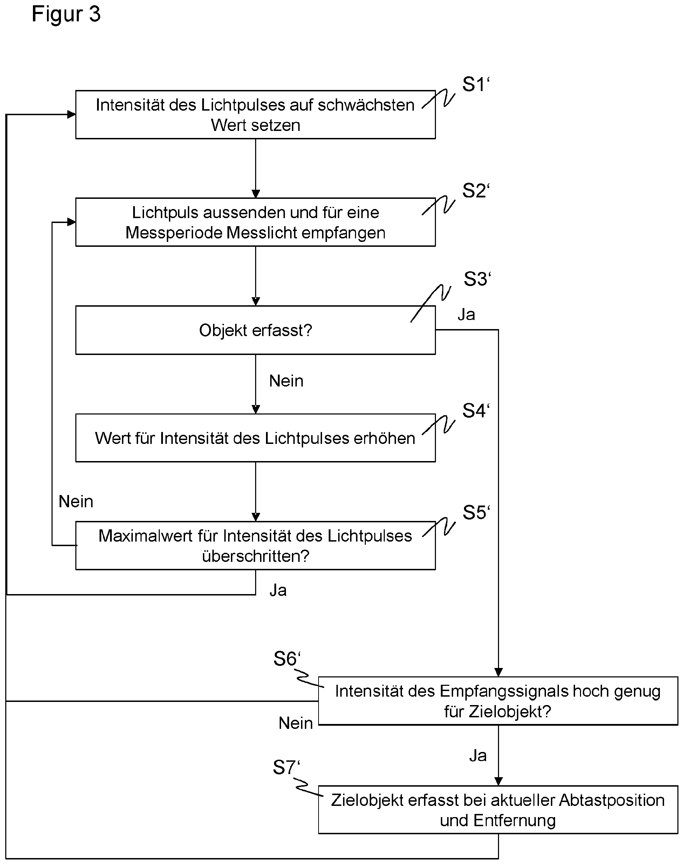

Die Erfindung setzt auf dem Gedanken auf, dass bei einer Messung mit erheblich weniger Sendeenergie nur noch Retroreflektoren erfasst werden. Dafür werden abgeschwächte Lichtpulse zum Messen verwendet, die entsprechend einem kleinsten spezifizierten Retroreflektor unter einer noch zulässigen Verdrehung ausgelegt sind. Um die passende Sendeenergie für den tatsächlichen Abstand des Retroreflektors zu finden, wird dieser Abstand beispielsweise vorab mit einer noch übersteuerten Messung bestimmt, wie zu Figur 2 erläutert, oder der Laserscanner 10 tastet sich iterativ an die Entfernung heran, wie zu Figur 3 erläutert.

Auf diese Weise wird der Retroreflektor im linearen Bereich erfasst, und das ermöglicht eine verlässliche Unterscheidung anhand des oben genannten Signalunterschieds von auch im ungünstigen Fall zumindest 20%-30%. In der Praxis kann der Laserstrom oberhalb der Laserschwelle für den Lichtsender 12 variiert werden. Für die oben angegebene Messperiode von 5,6 $\mu s$ könnten beispielsweise $N_{Pulse}$ = 5 unterschiedliche Leistungen $I_{Laser}$ ausgesandt werden, und das lässt Spielraum für diverse Herangehensweisen, um die passende Sendeenergie zu bestimmen. Für jeden Puls steht damit immer noch eine Messzeit $t_{mess} = \frac{T_{Delta}}{N_{Pulse}} = 1,1$ $\mu s$ zur Verfügung, die ausreicht, eine Entfernung bis zumindest 20 m abzudecken. Eine beispielhafte Aufteilung $I_{Laser1}$ = 50 *mW*, $I_{Laser2}$ = 100 *mW*, $I_{Laser3}$ = 200 *mW*, $I_{Laser4}$ = 400 *mW*, $I_{Laser5}$ = 800 *mW*. Die Sendeenergie wird effektiv auch dadurch variiert, dass im Empfangspfad die Verstärkung manipuliert, etwa die Vorspannung zu einer APD des Lichtempfängers 26 verstellt wird.

Figur 2 zeigt ein Ablaufschema für eine beispielhafte Herangehensweise von oben, d.h. einem starken Lichtpuls ausgehend, um die passende Sendeenergie zu finden. Mit dem starken Lichtpuls wird in einer testweisen, noch übersteuerten Messung die richtige Entfernung eines Objekts bestimmt, um dann anschließend eine für die gezielte Erfassung von Retroreflektoren passend ausgesteuerte Messung vorzunehmen.

In einem Schritt S1 wird dafür anfangs die Intensität des Lichtpulses auf einen stärksten Wert gesetzt. Diese Intensität soll für eine Erfassung von Objekten selbst in maximaler Reichweite des Laserscanners 10 bei maximal ungünstiger Verdrehung des Retroreflektors, die dessen effektive Fläche verringert, noch ausreichen.

Mit dieser stärksten Intensität des Lichtpulses wird dann in einem Schritt S2 eine Messung durchgeführt, d.h. der Lichtpuls ausgesandt und, sofern er auf ein Objekt trifft, wieder empfangen. Diese Messung wird auf ein beliebiges Objekt bis zur maximalen Reichweite reagieren.

In einem Schritt S3 wird geprüft, ob ein remittierter oder reflektierter Lichtpuls empfangen und somit ein Objekt erfasst wurde. Falls nicht, wird bei Schritt S1 auch für die nächste Messung die stärkste Intensität festgelegt. Ist ein Objekt erfasst, so wird in einem Schritt S4 dessen Entfernung mittels Lichtlaufzeitverfahren bestimmt.

In einem Schritt S5 wird nun die Intensität des Lichtpulses auf einen Wert gesetzt, bei dem ein Retroreflektor in der gemessenen Entfernung gerade so noch zuverlässig erfasst wird, und in einem Schritt S6 wird die entsprechende Messung durchgeführt.

In einem Schritt S7 wird ausgewertet, ob das Objekt, das in Schritt S3 erfasst wurde, ein Zielobjekt beziehungsweise Retroreflektor ist oder nicht. Die implizite Annahme dabei ist, dass die beiden Messungen in Schritt S2 und S5 dasselbe Objekt antasten, was wegen des minimalen Winkelschritts zulässig ist. Im obigen Zahlenbeispiel liegen zwischen den Messungen lediglich 1,1 μs oder 0,02°. Die Intensität des Lichtpulses ist durch Schritt S5 so ausgelegt, dass ein Retroreflektor gerade noch erkannt wird. Andere Objekte mit geringerem Remissionsvermögen werden bei dieser Intensität des Lichtpulses ignoriert oder jedenfalls mit unterscheidbar geringerem Empfangssignalpegel erfasst. Die angepasste Intensität des Lichtpulses sorgt zudem dafür, dass der Empfangspfad im zumindest weitgehend linearen Bereich bleibt. Daher lässt sich der Empfangspuls des Retroreflektors im Empfangssignal verlässlich detektieren, da Signalunterschiede von 20%-30% durch die lineare Erfassung tatsächlich im Empfangssignal abgebildet sind und dies auch ein für eine verlässliche Unterscheidung ausreichender Signalabstand ist.

Ist das Objekt aus Schritt S3 gemäß Schritt S7 kein Zielobjekt, so beginnt die nächste Messung wieder in Schritt S1 mit der stärksten Intensität. Ansonsten ist im Schritt S8 ein Zielobjekt erfasst, und es sind sowohl die zugehörige Winkelposition als auch Entfernung bekannt, so dass nachgelagerte Auswertungen entsprechend reagieren können. Das Verfahren wird dann ebenfalls mit der nächsten Messung in Schritt S1 mit der stärksten Intensität fortgesetzt. Später werden noch alternative Ausführungsformen beschrieben, die nach Erfassung eines Zielobjekts nicht einfach in den Ausgangszustand zurückkehren.

Figur 3 zeigt ein Ablaufschema für eine weitere beispielhafte Herangehensweise von unten, d.h. schwachen Lichtpulsen ausgehend, um die passende Sendeenergie zu finden. Hier tastet sich der Laserscanner 10 mit zunächst schwächsten und dann zunehmend stärkeren Lichtpulsen in immer größere Entfernungen vor, bis als erstes unter allen denkbaren Objekten ein Retroreflektor erfasst wird.

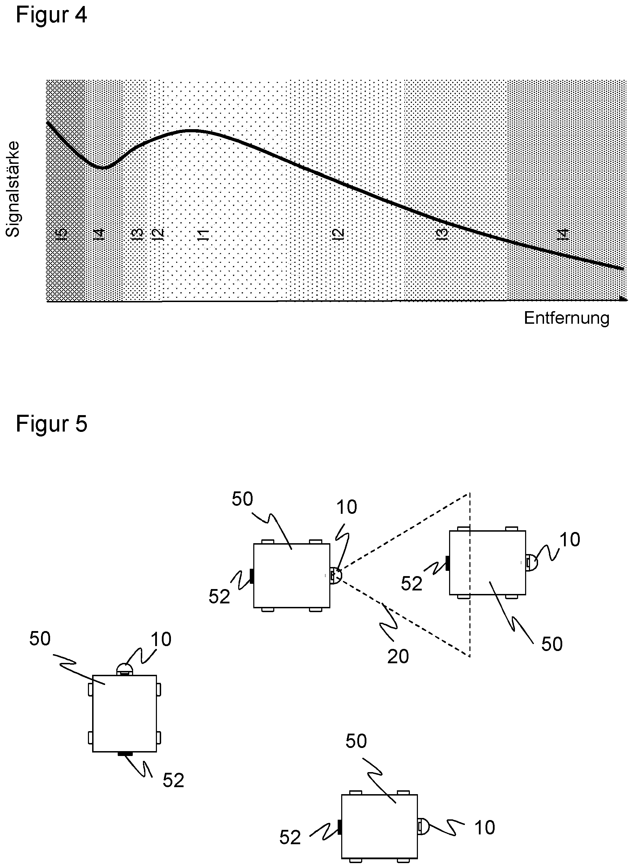

In einem ersten Schritt S1' wird die Intensität des Lichtpulses auf einen schwächsten Wert gesetzt. Die Energie reicht nur aus, um einen Retroreflektor in optimaler Entfernung zu erfassen. Später wird unter Bezugnahme auf Figur 4 und deren sogenannte Fadeout-Kurve noch erläutert, dass diese optimale Entfernung nicht unbedingt die kürzeste Entfernung ist, sondern in einem gewissen Abstand zum Laserscanner 10 liegen kann.

In einem Schritt S2' wird mit einem Lichtpuls dieser schwächsten Intensität gemessen und in einem Schritt S3' geprüft, ob dabei ein Objekt erfasst wird. Ist das nicht der Fall, so wird ein einem Schritt S4' die Intensität des Lichtpulses erhöht. Die höhere Intensität ermöglicht, mit der nächsten Messung einen Retroreflektor in größerer Entfernung beziehungsweise gemäß der Fadeout-Kurve noch näher im Nahbereich zu erfassen.

In einem Schritt S5' wird noch geprüft, ob die neue, höhere Intensität bereits den Maximalwert überschreitet. Solange das nicht der Fall ist, wird in einer iterativen Schleife der Schritte S2' bis S4' mit zunehmend stärkeren Pulsen nach einem Retroreflektor gesucht. Sobald der Maximalwert für die Intensität überschritten wird, ist klar, dass sich in dieser Abtastrichtung kein Retroreflektor befindet, und es wird im Schritt S1' wieder von vorne mit dem schwächsten Wert für die Intensität begonnen, um in einer neuen Abtastrichtung nach Retroreflektoren zu suchen.

Wenn in Schritt S3' ein Objekt erfasst wird, dann wird in einem Schritt S6' das Empfangssignal geprüft, ob das Objekt ein Zielobjekt beziehungsweise Retroreflektor ist. Dazu kann einerseits mit ganz üblichen Verfahren der Empfangspegel beispielsweise mit einer Schwelle ausgewertet werden, wobei diese Schwelle entsprechend dem Remissionsvermögen eines Retroreflektors gelegt ist. Das entspricht dann der Auswertung von Schritt S7 in Figur 2, nur dass der passende Wert für die Intensität des ausgesandten Lichtpulses auf andere Weise gefunden wurde. Zusätzlich ist auch möglich, in Schritt S6' die Entfernung des Objekts zu bestimmen. Diese Entfernung sollte für einen Retroreflektor nahe der Reichweitengrenze des ausgesandten Lichtpulses mit dieser Intensität liegen. Bei kürzerer Entfernung handelt es sich um ein sonstiges Objekt, denn ein Retroreflektor in der kürzeren Entfernung wäre schon in einer früheren Iteration mit weniger Intensität des Lichtpulses erfasst worden.

In einem Schritt S7' ist ein Zielobjekt erfasst, und es sind sowohl die zugehörige Winkelposition als auch Entfernung bekannt, so dass nachgelagerte Auswertungen entsprechend reagieren können. Das Verfahren wird dann mit der nächsten Messung in Schritt S1' wieder mit der schwächsten Intensität fortgesetzt.

Wie bereits zu Figur 2 angedeutet, kann das Verfahren optimiert werden, indem im Anschluss an die Erfassung eines Zielobjekts nicht wieder mit der anfänglichen stärksten beziehungsweise schwächsten Intensität gemessen wird. Beispielsweise kann die Intensität auch nur um einen gewissen Anteil in Richtung auf den Anfangswert erhöht beziehungsweise herabgesetzt werden. Alternativ bleibt der Wert für die Intensität des Lichtpulses solange auf dem angepassten Wert, wie mit weiteren Messungen das Zielobjekt erkannt wird, und kehrt erst nach einer Nichterkennung des Zielobjekts wieder partiell oder vollständig auf den Anfangswert zurück. Die gemessene Entfernung ist dabei weiterhin zu überwachen, damit ein zweiter, näherer Retroreflektor erkannt wird.

Das vorläufige Beibehalten einer einmal eingestellten Intensität ist ein einfaches Beispiel für ein Objekttracking innerhalb eines Umlaufs der Ablenkeinheit 18. Es sind auch komplexere Verfahren vorstellbar. Bei den nachfolgenden Umläufen sind bereits die Winkelsegmente der zuvor erfassten Retroreflektoren bekannt, und somit können in diesen Abtastbereichen bessere Startwerte für die Intensität des Lichtpulses verwendet werden als minimale oder maximale Werte. Dabei können gewisse Toleranzen für eine zwischenzeitliche relative Bewegung des Retroreflektors vorgesehen sein. Es ist auch eine Objektverfolgung denkbar, die aus der Historie die künftigen von einem Retroreflektor eingenommenen Winkelpositionen und Entfernungen vorhersagt. Solche Optimierungsmaßnahmen verkürzen die Ansprechzeit, weil weniger Abtastungen zum Kalibrieren der Intensität verloren gehen. Außerdem ermöglicht es Plausibilisierungen, damit einzelne Störungen nicht versehentlich als Zielobjekt erkannt werden.

Figur 4 zeigt eine Darstellung der Signalstärke in Abhängigkeit von der Entfernung des angetasteten Objekts und damit die schon mehrfach angesprochene Fadeout-Kurve. Unterlegt sind in verschiedenen Graustufen Entfernungsbereiche mit passenden zunehmenden Laserströmen I1...I5, um für den jeweiligen Entfernungsbereich eine Intensität der Lichtpulse einzustellen. Sollen also Retroreflektoren in einem bestimmten Entfernungsbereich erfasst werden, so ist dafür der zugehörige Laserstrom einzustellen. Die dargestellte Kurve bezeichnet die Schwelle, anhand derer zwischen einem Retroreflektor und einem metallisch spiegelnden Objekt unterschieden wird. Der konkrete Kurvenverlauf und die zugehörigen Laserströme sind vom konkreten Aufbau des Laserscanners abhängig und nur exemplarisch gezeigt.

Entsprechend dem Kurvenverlauf in Figur 4 gibt es einen Entfernungsbereich, wo sich Sende- und Empfangskeule des Laserscanners 10 erstmalig vollständig überlappen. Dort kann mit kleinster Energie beziehungsweise kleinstem Laserstrom I1 gearbeitet werden. Zu größeren Entfernungen hin wird dann zunehmend Sendeenergie benötigt, wobei dies statt diskret in den Stufen I2..I5 auch kontinuierlich eingestellt werden kann. Aber auch im Nahbereich, wo der Überlapp zwischen Sende- und Empfangskeule geringer und irgendwann marginal wird, ist eine höhere Intensität erforderlich, um überhaupt noch ein relevantes Signal zu empfangen.

Figur 5 zeigt ein Anwendungsbeispiel. Fahrzeuge 50 sind jeweils mit mindestens einem Laserscanner 10 und mindestens einem kooperativen Ziel oder Retroreflektor 52 ausgerüstet. Die Fahrzeuge 50 sind beispielsweise AGVs (automated guided vehicle) oder sonstige fahrbare Transporteinheiten in einer Fabrik- oder Logistikanlage, die sich frei oder schienengebunden bewegen. In einer bevorzugten Anwendung handelt es sich um die Laufwagen einer Hängefördereinrichtung speziell im Bereich der Mikrosystemtechnik beziehungsweise Halbleiterherstellung (Foundry). Die Laserscanner 10 erfassen jeweils die Retroreflektoren 52 der anderen Fahrzeuge 50 und erkennen daran ihre Relativpositionen zueinander. So lassen sich Kollisionen vermeiden, indem die Fahrzeuge 50 einander ausweichen, Geschwindigkeiten anpassen oder notfalls einen Bremsvorgang auslösen.

Je genauer die Erfassung und je kürzer die Ansprechzeit dabei ist, desto schneller können die Fahrzeuge 50 fahren, da sie rechtzeitiger und zielgerichteter aufeinander reagieren. Dabei sind nicht nur statische Erfassungen nützlich, sondern auch komplexere Auswertungen wie oben beschrieben. Beispielsweise kann durch Objekttracking festgestellt werden, dass ein vorausfahrendes Fahrzeug 50 beschleunigt, so dass nicht etwa gebremst werden muss, sondern sogar ebenfalls beschleunigt werden kann. Die erforderliche Datenauswertung erfolgt vorzugsweise autonom je Fahrzeug 50, kann aber ebenso von einer übergeordneten Steuerung übernommen oder unterstützt werden.

In einer weiteren Ausführungsform werden die Retroreflektoren 52 mit einem Muster codiert, indem mindestens ein Wechsel zwischen Reflexionsbereich und nicht reflektierendem oder Absorbtionsbereich vorgesehen ist. Dadurch wird eine verbesserte Störunterdrückung erreicht. Es ist sogar vorstellbar, dass die Fahrzeuge 50 einander anhand der Codierung individuell erkennen oder Fahrtanweisungen erhalten, beispielsweise einen bestimmten Mindestabstand zu dem Fahrzeug 50 mit dem entsprechend codierten Retroreflektor 52 einzuhalten.

## Patentansprüche

1. Entfernungsmessender optoelektronischer Sensor (10), insbesondere Laserscanner, zur Erfassung eines Zielobjekts (52) in einem Überwachungsbereich (20), der einen Lichtsender (12) zum Aussenden von Lichtpulsen (16), eine Ablenkeinheit (18) zur periodischen Abtastung des Überwachungsbereichs (20) mit den Lichtpulsen (16), einen Lichtempfänger (26) zum Erzeugen eines Empfangssignals aus den von Objekten in dem Überwachungsbereich (20) reflektierten oder remittierten Lichtpulsen (22) sowie eine Steuer- und Auswertungseinheit (34) aufweist, die dafür ausgebildet ist, die Entfernung eines Objekts aus einer Lichtlaufzeit eines Lichtpulses (16, 22) zu bestimmen und Lichtpulse (16) unterschiedlicher Intensität auszusenden,
**dadurch gekennzeichnet,**
**dass** zur Erfassung eines Zielobjekts (52), d.h. eines Objekts einer Klasse, die sich durch ein bestimmtes Reflexionsvermögen definiert, die Steuer- und Auswertungseinheit (34) weiterhin dafür ausgebildet ist, variierte an das Reflexionsvermögen und eine Reichweite angepasste Lichtpulse (16) auszusenden, deren Sendeenergie gerade ausreicht, innerhalb der dadurch begrenzten Reichweite ein Zielobjekt noch zu erfassen, um mittels der Reichweite und der daraus abgeleiteten Intensität des Lichtpulses bestimmte Entfernungsintervalle auf Zielobjekte (52) zu testen und damit die Intensität der Lichtpulse (16) so auszusteuern, dass ein ausreichender Signalabstand zwischen Zielobjekt (52) und sonstigem Objekt geschaffen und so die Unterscheidung zwischen Zielobjekt (52) und sonstigem Objekt möglich ist, wobei ein zum sonstigen Objekt zugehöriger Empfangspuls für eine Erkennung zu schwach ist.

2. Sensor (10) nach Anspruch 1,
wobei das Zielobjekt (52) ein Retroreflektor ist.

3. Sensor (10) nach Anspruch 1 oder 2,
wobei die Steuer- und Auswertungseinheit (34) dafür ausgebildet ist, die Intensität eines Lichtpulses (16) durch die Stromstärke des Lichtsenders (12) einzustellen.

4. Sensor (10) nach einem der vorhergehenden Ansprüche,
wobei dem Lichtempfänger (26) mehrere Empfangskanäle unterschiedlicher Empfindlichkeit zugeordnet sind.

5. Sensor (10) nach einem der vorhergehenden Ansprüche,
wobei die Steuer- und Auswertungseinheit (34) dafür ausgebildet ist, die Intensität der Lichtpulse (16) zu großen und sehr kleinen Reichweiten hin zu steigern.

6. Sensor (10) nach einem der vorhergehenden Ansprüche,
wobei die Steuer- und Auswertungseinheit (34) dafür ausgebildet ist, anfänglich und/oder solange kein Objekt oder Zielobjekt (52) erkannt ist Lichtpulse (16) mit einer Intensität auszusenden, die einer maximalen Reichweite entspricht.

7. Sensor (10) nach Anspruch 6,
wobei die Steuer- und Auswertungseinheit (34) dafür ausgebildet ist, bei Erfassen eines Objekts anschließend einen Lichtpuls (16 mit einer Intensität auszusenden, die einer Reichweite für die gemessene Entfernung des Objekts entspricht.'

8. Sensor (10) nach einem der Ansprüche 1 bis 5,
wobei die Steuer- und Auswertungseinheit (34) dafür ausgebildet ist, anfänglich Lichtpulse (16) mit einer minimalen Intensität auszusenden, wobei die minimale Intensität insbesondere einer Reichweite entspricht, aus der ein Lichtpuls (16, 22) optimal remittiert oder reflektiert wird.

9. Sensor (10) nach Anspruch 8,
wobei die Steuer- und Auswertungseinheit (34) dafür ausgebildet ist, die Intensität mindestens eines weiteren Lichtpulses (16) zu erhöhen, bis entweder ein Objekt erfasst ist oder die Intensität einer maximalen Reichweite entspricht.

10. Sensor (10) nach einem der vorhergehenden Ansprüche,
wobei die Steuer- und Auswertungseinheit (34) dafür ausgebildet ist, bei einer für ein Zielobjekt (52) eingestellten Intensität des Lichtpulses (16) anhand der Intensität des Empfangssignals Zielobjekt (52) und sonstiges Objekt zu unterscheiden.

11. Sensor (10) nach einem der vorhergehenden Ansprüche,
wobei die Steuer- und Auswertungseinheit (34) dafür ausgebildet ist, eine eingestellte Intensität des Lichtpulses (16) in derselben und/oder einer nachfolgenden periodischen Abtastung innerhalb eines Winkelbereichs des Zielobjekts (52) beizubehalten oder an eine Erwartung des Abstands des Zielobjekts (52) anzupassen.

12. Sensor (10) nach einem der vorhergehenden Ansprüche,
wobei die Steuer- und Auswertungseinheit (34) dafür ausgebildet ist, zu einer anfänglichen Intensität der Lichtpulse (16) zurückzukehren, insbesondere einer minimalen oder maximalen Intensität, sobald das Zielobjekt (52) nicht mehr erfasst ist.

13. Sensor (10) nach einem der vorhergehenden Ansprüche,
wobei die Steuer- und Auswertungseinheit (34) dafür ausgebildet ist, auch während der Erfassung eines Zielobjekts (52) dessen Entfernung zu messen und bei deren Veränderung die Intensität des Lichtpulses (16) anzupassen.

14. System (50, 10, 52) mit mehreren, insbesondere schienengebundenen, Fahrzeugen (50), die jeweils mindestens einen Sensor (10) nach einem der vorhergehenden Ansprüche und mindestens ein Zielobjekt (52) aufweisen, insbesondere einen Retroreflektor, wobei zur Unfallvermeidung anhand der Erfassung der Zielobjekte (52) durch die Sensoren (10) die gegenseitigen Positionen der Fahrzeuge (50) erkannt werden, wobei die Zielobjekte (52) insbesondere eine Codierung aus Teilbereichen unterschiedlichen Reflexionsvermögens aufweisen.

15. Verfahren zur Erfassung eines Zielobjekts (52) in einem Überwachungsbereich (20), wobei Lichtpulse (16) unterschiedlicher Intensität ausgesandt und zur Abtastung des Überwachungsbereichs (20) periodisch abgelenkt werden, wobei die von Objekten in dem Überwachungsbereich (20) reflektierten oder remittierten Lichtpulse (22) empfangen werden, um ein Empfangssignal zu erzeugen, das ausgewertet wird, um die Entfernung eines angetasteten Objekts aus einer Lichtlaufzeit eines ausgesandten und wieder empfangenen Lichtpulses (16, 22) zu bestimmen,
**dadurch gekennzeichnet,**

**dass** zur Erfassung eines Zielobjekts (52), d.h. eines Objekts einer Klasse, die sich durch ein bestimmtes Reflexionsvermögen definiert, variierte an das Reflexionsvermögen und eine Reichweite angepasste Lichtpulse (16) ausgesandt werden, deren Sendeenergie gerade ausreicht, innerhalb der dadurch begrenzten Reichweite ein Zielobjekt noch zu erfassen, um mittels der Reichweite und der daraus abgeleiteten Intensität des Lichtpulses bestimmte Entfernungsintervalle auf Zielobjekte (52) zu testen und damit die Intensität der Lichtpulse (16) so ausgesteuert wird, dass ein ausreichender Signalabstand zwischen Zielobjekt (52) und sonstigem Objekt geschaffen und so zwischen Zielobjekt (52) und sonstigem Objekt unterschieden wird, wobei ein zum sonstigen Objekt zugehöriger Empfangspuls für eine Erkennung zu schwach ist.

**Claims**

1. A distance-measuring optoelectronic sensor (10), in particular laser scanner, for detecting a target object (52) in a monitoring area (20), comprising a light transmitter (12) for transmitting light pulses (16), a deflection unit (18) for periodically scanning the monitoring area (20) with the light pulses (16), a light receiver (26) for generating a received signal from the remitted light pulses (22) reflected or remitted by objects in the monitoring area (20), and a control and evaluation unit (34) configured to determine the distance of an object from a light time of flight of a light pulse (16, 22) and to transmit light pulses (16) of different intensity, **characterized in that**, in order to detect a target object (52), i.e. an object of a class defined by a certain reflectivity, the control and evaluation unit (34) is further configured to transmit varied light pulses (16) adapted to the reflectivity and a range whose transmitted energy is just sufficient to still detect a target object within the limited range, in order to test specific distance intervals for target objects (52) by means of the range and the intensity of the light pulse derived therefrom and thus to control the intensity of the light pulses (16) in such a way that a sufficient signal difference is created between the target object (52) and the other object and thus the differentiation between the target object (52) and the other object is possible, wherein a received pulse associated with the other object is too weak for detection.

2. The sensor (10) according to claim 1, wherein the target (52) is a retro-reflector.

3. The sensor (10) according to claim 1 or 2, wherein the control and evaluation unit (34) is configured to adjust the intensity of a light pulse (16) by means of the current of the light transmitter (12).

4. The sensor (10) according to any of the preceding claims, wherein a plurality of receiving channels of different sensitivity are assigned to the light receiver (26).

5. The sensor (10) according to any of the preceding claims, wherein the control and evaluation unit (34) is configured to increase the intensity of the light pulses (16) towards large and very small ranges.

6. The sensor (10) according to any of the preceding claims, wherein the control and evaluation unit (34) is configured to transmit light pulses (16) with an intensity corresponding to a maximum range initially and/or as long as no object or no target object (52) is detected.

7. The sensor (10) according to claim 6, wherein the control and evaluation unit (34) is configured, upon detection of an object, to subsequently transmit a light pulse (16) having an intensity corresponding to a range for the measured distance of the object.

8. The sensor (10) according to any of claims 1 to 5, wherein the control and evaluation unit (34) is configured to initially transmit light pulses (16) with a minimum intensity, the minimum intensity in particular corresponding to a range from which a light pulse (16, 22) is optimally remitted or reflected.

9. The sensor (10) according to claim 8, wherein the control and evaluation unit (34) is configured to increase the intensity of at least one further light pulse (16) until either an object is detected or the intensity corresponds to a maximum range.

10. The sensor (10) according to any of the preceding claims, wherein the control and evaluation unit (34) is configured, when an intensity of the light pulse (16) is set for a target object (52), to distinguish between target object (52) and other object on the basis of the intensity of the received signal.

11. The sensor (10) according to any of the preceding claims, wherein the control and evaluation unit (34) is configured to maintain a set intensity of the light pulse (16) in the same and/or a subsequent periodic scan within an angular range of the target object (52) or to adapt it to an expectation of the distance of the target object (52).

12. The sensor (10) according to any of the preceding claims,

wherein the control and evaluation unit (34) is configured to return to an initial intensity of the light pulses (16), in particular a minimum or maximum intensity, when the target object (52) is no longer detected.

13. The sensor (10) according to any of the preceding claims,
wherein the control and evaluation unit (34) is configured to measure the distance of a target object (52) also during the detection thereof and to adjust the intensity of the light pulse (16) in the event of a change thereof.

14. A system (50, 10, 52) having a plurality of vehicles (50), in particular rail-bound vehicles (50), each comprising at least one sensor (10) according to any of the preceding claims and at least one target object (52), in particular a retroreflector, wherein the mutual positions of the vehicles (50) are detected based on the detection of the target objects (52) by the sensors (10) in order to prevent accidents, the target objects (52) in particular comprising a code including subregions of different reflectivity.

15. A method for detecting a target object (52) in a monitoring area (20), wherein light pulses (16) of different intensity are transmitted and periodically deflected for scanning the monitoring area (20), wherein the remitted light pulses (22) reflected or remitted by objects in the monitoring area (20) are received to generate a received signal which is evaluated to determine the distance of a scanned object from a light time of flight of a transmitted and received light pulse (16, 22),
**characterized in that** for detecting a target object (52), i.e. an object of a class defined by a certain reflectivity, varied light pulses (16) adapted to the reflectivity and a range are transmitted whose transmitted energy is just sufficient to still detect a target object within the limited range, in order to test specific distance intervals for target objects (52) by means of the range and the intensity of the light pulse derived therefrom and thus to control the intensity of the light pulses (16) in such a way that a sufficient signal difference is created between the target object (52) and the other object and thus to distinguish between the target object (52) and the other object, wherein a received pulse associated with the other object is too weak for detection.

## Revendications

1. Capteur optoélectronique (10) de mesure de distance, en particulier scanner laser, pour détecter un objet cible (52) dans une zone à surveiller (20), qui comprend un émetteur de lumière (12) pour émettre des impulsions lumineuses (16), une unité de déviation (18) pour balayer périodiquement la zone à surveiller (20) avec les impulsions lumineuses (16), un récepteur de lumière (26) pour générer un signal de réception à partir des impulsions lumineuses (22) réfléchies ou renvoyées par des objets dans la zone à surveiller (20), ainsi qu'une unité de commande et d'évaluation (34) qui est réalisée pour déterminer la distance d'un objet à partir d'un temps de vol de lumière d'une impulsion lumineuse (16, 22) et pour émettre des impulsions lumineuses (16) d'intensité différente,
**caractérisé en ce que**
pour détecter un objet cible (52), c'est-à-dire un objet d'une classe qui se définit par une réflectivité déterminée, l'unité de commande et d'évaluation (34) est en outre réalisée pour émettre des impulsions lumineuses (16) variant adaptées à la réflectivité et à une portée, dont l'énergie d'émission suffit juste à détecter encore un objet cible à l'intérieur de la portée ainsi limitée, afin de tester des intervalles de distance déterminés sur des objets cibles (52) au moyen de la portée et de l'intensité de l'impulsion lumineuse qui en est déduite, et afin de commander ainsi l'intensité des impulsions lumineuses (16) de manière à créer un intervalle de signal suffisant entre l'objet cible (52) et un autre objet et à faire ainsi la distinction entre l'objet cible (52) et un autre objet, une impulsion de réception associée à l'autre objet étant trop faible pour être reconnue.

2. Capteur (10) selon la revendication 1,
dans lequel l'objet cible (52) est un rétro-réflecteur.

3. Capteur (10) selon la revendication 1 ou 2,
dans lequel l'unité de commande et d'évaluation (34) est réalisée pour régler l'intensité d'une impulsion lumineuse (16) par l'intensité du courant de l'émetteur de lumière (12).

4. Capteur (10) selon l'une des revendications précédentes,
dans lequel plusieurs canaux de réception de sensibilité différente sont affectés au récepteur de lumière (26).

5. Capteur (10) selon l'une des revendications précédentes,
dans lequel l'unité de commande et d'évaluation (34) est réalisée pour accroître l'intensité des impulsions lumineuses (16) vers de grandes et de très petites portées.

6. Capteur (10) selon l'une des revendications précédentes,
dans lequel l'unité de commande et d'évaluation (34) est réalisée pour, initialement et/ou tant qu'aucun objet ou objet cible (52) n'est reconnu, émettre des impulsions lumineuses (16) d'une intensité qui correspond à une portée maximale.

7. Capteur (10) selon la revendication 6, dans lequel l'unité de commande et d'évaluation (34) est réalisée pour, lorsqu'un objet est détecté, émettre ensuite une impulsion lumineuse (16) d'une intensité qui correspond à une portée pour la distance mesurée de l'objet.

8. Capteur (10) selon l'une des revendications 1 à 5, dans lequel l'unité de commande et d'évaluation (34) est réalisée pour émettre initialement des impulsions lumineuses (16) d'une intensité minimale, l'intensité minimale correspondant en particulier à une portée à laquelle une impulsion lumineuse (16, 22) est renvoyée ou réfléchie de manière optimale.

9. Capteur (10) selon la revendication 8, dans lequel l'unité de commande et d'évaluation (34) est réalisée pour augmenter l'intensité d'au moins une autre impulsion lumineuse (16) jusqu'à ce qu'un objet soit détecté ou que l'intensité corresponde à une portée maximale.

10. Capteur (10) selon l'une des revendications précédentes, dans lequel l'unité de commande et d'évaluation (34) est réalisée pour distinguer, à une intensité de l'impulsion lumineuse (16) réglée pour un objet cible (52), l'objet cible (52) et un autre objet à l'aide de l'intensité du signal de réception.

11. Capteur (10) selon l'une des revendications précédentes, dans lequel l'unité de commande et d'évaluation (34) est réalisée pour, lors du même balayage et/ou d'un balayage périodique suivant, maintenir une intensité réglée de l'impulsion lumineuse (16) à l'intérieur d'une plage angulaire de l'objet cible (52) ou pour l'adapter à une attente de la distance de l'objet cible (52).

12. Capteur (10) selon l'une des revendications précédentes, dans lequel l'unité de commande et d'évaluation (34) est réalisée pour revenir à une intensité initiale des impulsions lumineuses (16), en particulier à une intensité minimale ou maximale, dès que l'objet cible (52) n'est plus détecté.

13. Capteur (10) selon l'une des revendications précédentes, dans lequel l'unité de commande et d'évaluation (34) est réalisée pour mesurer la distance d'un objet cible (52) même pendant sa détection et pour adapter l'intensité de l'impulsion lumineuse (16) en cas de variation de ladite distance.

14. Système (50, 10, 52) comprenant plusieurs véhicules (50), en particulier guidés sur rails, qui présentent chacun au moins un capteur (10) selon l'une des revendications précédentes et au moins un objet cible (52), en particulier un rétro-réflecteur, les positions réciproques des véhicules (50) étant reconnues pour éviter les accidents à l'aide de la détection des objets cibles (52) par les capteurs (10), les objets cibles (52) présentant en particulier un codage constitué de zones partielles de réflectivité différente.

15. Procédé de détection d'un objet cible (52) dans une zone à surveiller (20), des impulsions lumineuses (16) d'intensité différente étant émises et déviées périodiquement pour balayer la zone à surveiller (20), les impulsions lumineuses (22) réfléchies ou renvoyées par des objets dans la zone à surveiller (20) étant reçues pour générer un signal de réception qui est évalué afin de déterminer la distance d'un objet balayé à partir d'un temps de vol de lumière d'une impulsion lumineuse (16, 22) émise et reçue, **caractérisé en ce que** pour détecter un objet cible (52), c'est-à-dire un objet d'une classe qui se définit par une réflectivité déterminée, des impulsions lumineuses (16) variant adaptées à la réflectivité et à une portée sont émises, dont l'énergie d'émission suffit juste à détecter encore un objet cible à l'intérieur de la portée ainsi limitée, afin de tester des intervalles de distance déterminés sur des objets cibles (52) au moyen de la portée et de l'intensité de l'impulsion lumineuse qui en est déduite, et l'intensité des impulsions lumineuses (16) est ainsi commandée de manière à créer un intervalle de signal suffisant entre l'objet cible (52) et un autre objet, et à faire ainsi la distinction entre l'objet cible (52) et un autre objet, une impulsion de réception associée à l'autre objet étant trop faible pour être reconnue.

Figur 1

# Figur 2

Intensität des Lichtpulses auf stärksten Wert setzen — S1

Lichtpuls aussenden und für eine Messperiode Messlicht empfangen — S2

Nein

Objekt erfasst? — S3

Ja

Entfernung des Objekts bestimmen — S4

Intensität des Lichtpulses auf Wert entsprechend der Entfernung setzen — S5

Lichtpuls aussenden und für eine Messperiode Messlicht empfangen — S6

Intensität des Empfangssignals hoch genug für Zielobjekt? — S7

Nein

Ja

Zielobjekt erfasst bei aktueller Abtastposition und Entfernung — S8

# Figur 3

Intensität des Lichtpulses auf schwächsten Wert setzen — S1'

Lichtpuls aussenden und für eine Messperiode Messlicht empfangen — S2'

Objekt erfasst? — S3'    Ja

Nein

Wert für Intensität des Lichtpulses erhöhen — S4'

Nein

Maximalwert für Intensität des Lichtpulses überschritten? — S5'

Ja

S6' — Intensität des Empfangssignals hoch genug für Zielobjekt?

Nein    Ja

S7' — Zielobjekt erfasst bei aktueller Abtastposition und Entfernung

## Figur 4

Signalstärke

I5 I4 I3 I2 I1 I2 I3 I4

Entfernung

## Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- WO 2018150999 A1
- DE 102018104787 A1
- EP 1936400 B1
- EP 2395368 B1
- US 20190064331 A1
- DE 3903501 A1
- DE 102014100696 B3
- US 20180113200 A1